# FASCICULE DE BREVET EUROPEEN

(11) **EP 0 687 609 B1**
(45) Date de publication et mention de la délivrance du brevet: **29.07.1998**
(21) Numéro de dépôt: 95401342.1
(22) Date de dépôt: 09.06.1995
(51) Int. Cl.: B61C 17/12

(54) **Dispositif de commande de la traction ou du freinage d'un véhicule, notamment ferroviaire et son procedé de mise en oeuvre**
Vorrichtung zur Antriebs- oder Bremssteuerung eines Fahrzeuges, insbesondere Schienenfahrzeuges und Verfahren zu ihrer Durchführung
Device for traction or braking control of a vehicle, especially rail vehicle, and method for carrying it out

(30) Priorité: 14.06.1994 FR 9407233
(43) Date de publication de la demande: 20.12.1995
(73) Titulaire: GEC ALSTHOM TRANSPORT SA, 75116 Paris (FR)
(72) Inventeur: Vernier, Jean-Pierre, F-65000 Tarbes (FR); Chappet, Philippe, F-90300 Cravanche (FR); Perret, Marc, F-77380 Combs La Ville (FR); Garret, Didier, F-90340 Chevremont (FR)
(74) Mandataire: Fournier, Michel

(56) Documents cités:
- EP-A- 0 473 512
- DE-A- 2 512 466
- US-A- 4 796 480

## Description

La présente invention concerne l'agencement des commandes sur les tableaux de bord des véhicules, notamment ferroviaire, en général.

La présente invention concerne également la commande combinée d'au moins deux sous-ensembles, à savoir la commande d'un moteur et d'un système de freinage d'un véhicule, notamment ferroviaire.

La présente invention porte, plus particulièrement, sur un dispositif de commande de la traction ou du freinage d'un véhicule, notamment ferroviaire.

La présente invention porte également sur un procédé de mise en oeuvre du dispositif de commande de la traction ou du freinage d'un véhicule, notamment ferroviaire.

Les systèmes de commande de traction-freinage connu de l'état de la technique nécessitent au minimum deux moyens de commande.

Un premier moyen de commande est affecté à l'activation de la traction et du freinage électrique.

Un deuxième moyen de commande est affecté à l'activation du freinage pneumatique.

Un troisième moyen de commande est habituellement affecté au freinage d'urgence, à savoir la mise en action de tous les systèmes de freinage disponibles.

De tels systèmes ont pour inconvénients majeurs de nécessiter au moins deux moyens de commandes distincts, généralement trois, ce qui augmente les possibilités d'erreurs humaines lors de situations dégradées par une multiplicité de stratégies possibles et de procédures de régulation de vitesse par l'agent de conduite.

Un autre inconvénient des systèmes de conduite de l'art antérieur est qu'ils sont potentiellement générateur de dépassement de vitesse imposée par le conducteur.

Un autre inconvénient des systèmes de conduite de l'art antérieur est qu'ils sont jugés complexe en terme d'utilisation.

Un autre inconvénient des systèmes de conduite de l'art antérieur est qu'ils nécessitent un grand nombre d'actions pour passer d'un freinage rhéostatique à un freinage pneumatique seul, ou de la traction à un freinage électrique.

Un autre inconvénient des systèmes de conduite de l'art antérieur est qu'ils procurent un inconfort postural dû à des actions de commandes d'amplitudes importantes.

Un autre inconvénient des systèmes de conduite de l'art antérieur est l'encombrement très important des commandes de traction et de freinage.

Un autre inconvénient des systèmes de conduite de l'art antérieur est qu'aucune sécurité ne permet d'éviter un déréglage involontaire de la commande.

Aussi un but de l'invention est-il un dispositif de commande de la traction ou du freinage d'un véhicule, permettant de simplifier la mise en oeuvre des fonctions de traction ou de freinage du véhicule.

Un autre but de l'invention est un dispositif de commande de la traction ou du freinage d'un véhicule rendant automatique la marche du véhicule sur certaines portions de lignes prédéterminées.

Conformément à l'invention, le dispositif de commande de la traction ou du freinage d'un véhicule, notamment ferroviaire, comportant un levier de commande mobile, se caractérise en ce que ce levier est susceptible:
- d'être positionné sur une première position 0 sur laquelle les fonctions de traction ou de freinage ne sont pas activées;
- d'être maintenu sur une position instable 0i sur laquelle le véhicule roule sur l'erre par annulation des efforts de traction et de freinage électriques;
- de parcourir une première zone 0+, partant de ladite première position 0, sur laquelle la fonction de traction électrique est activée, soit par augmentation de l'effort de traction électrique, soit par diminution de l'effort de freinage électrique;
- de parcourir une deuxième zone 0-, partant de ladite première position 0, sur laquelle la fonction de freinage électrique est activée, soit par diminution de l'effort de traction électrique, soit par augmentation de l'effort de freinage électrique;
- de parcourir une troisième zone -F, partant de l'extrémité de ladite deuxième zone 0-, sur laquelle la fonction de freinage pneumatique est activée; et
- d'être positionné sur une seconde position URG, faisant suite à ladite troisième zone -F, sur laquelle les fonctions de freinage électrique et pneumatique sont activées en même temps.

L'invention a également pour objet un dispositif de commande associé à un dispositif de réglage de la vitesse de butée permettant une sélection d'une vitesse de butée de manière à limiter la vitesse en garantissant le maintient automatique de la vitesse du véhicule à la vitesse de butée.

L'invention a également pour objet un dispositif de commande associé à un commutateur à deux positions MANUEL et SAAC permettant la sélection du mode de conduite.

L'invention a également pour objet un dispositif de commande associé à un système automatique d'assistance à la conduite SAAC permettant un pilotage automatique du véhicule.

L'invention a également pour objet un dispositif de commande associé audit système automatique d'assistance à la conduite SAAC lequel comprend l'une ou l'autre des options suivantes:
- conduite à la vitesse maximum permise par la ligne,
- conduite à un pourcentage de cette vitesse maximum de la ligne, ou
- conduite aux vitesses horaires.

L'invention a également pour objet un dispositif de commande associé à un premier dispositif à affichage permettant de visualiser les niveaux d'efforts de traction ou de freinage.

L'invention a également pour objet un dispositif de commande associé audit dispositif à affichage lequel comprend une zone de visualisation de l'effort de traction électrique, une zone centrale de visualisation d'effort nul, une zone de visualisation de l'effort de freinage électrique et une zone de visualisation du freinage pneumatique et d'urgence.

L'invention a également pour objet un dispositif de commande associé à un second dispositif à affichage permettant de visualiser la vitesse de butée sélectionnée et validée.

L'invention a également pour objet un procédé de mise en oeuvre du dispositif de commande de la traction ou du freinage d'un véhicule caractérisé en ce qu'il comporte au moins l'une des étapes suivantes:
- activation des fonctions de traction ou de freinage lorsque le levier de commande est positionné sur une première position 0;
- activation du roulement sur l'erre du véhicule, lorsque le levier de commande est maintenu sur une position instable 0i, par annulation des efforts de traction et de freinage électriques;
- activation de la fonction de traction lorsque le levier de commande parcourt une première zone 0+, partant de ladite première position 0, soit par augmentation de l'effort de traction électrique, soit par diminution de l'effort de freinage électrique;
- activation de la fonction de freinage électrique lorsque le levier de commande parcourt une deuxième zone 0-, partant de ladite première position 0, soit par diminution de l'effort de traction électrique, soit par augmentation de l'effort de freinage électrique;
- activation de la fonction de freinage pneumatique lorsque le levier de commande parcourt une troisième zone -F, partant de l'extrémité - de ladite deuxième zone 0-; et
- activation des fonctions de freinage électrique et pneumatique lorsque le levier de commande est positionné sur une seconde position URG, faisant suite à ladite troisième zone -F.

Le procédé de l'invention comporte au moins l'une des étapes suivantes:
- visualisation des niveaux d'efforts de traction ou de freinage s'effectue au moyen d'un premier dispositif à affichage; et
- visualisation de la vitesse de butée sélectionnée et validée s'effectue au moyen d'un second dispositif à affichage.

Un avantage du dispositif de commande de la traction ou du freinage d'un véhicule conforme à l'invention est la réduction au minimum du potentialité d'erreur humain lors d'une régulation de vitesse et donc un accroissement de la sécurité.

Un autre avantage du dispositif de commande de la traction ou du freinage d'un véhicule conforme à l'invention est l'augmentation de l'efficacité de la conduite.

Un autre avantage du dispositif de commande de la traction ou du freinage d'un véhicule conforme à l'invention est l'atténuation de la fatigue nerveuse de l'agent de conduite du fait de la simplification de la procédure de conduite et de l'amélioration du retour d'informations.

Un autre avantage du dispositif de commande de la traction ou du freinage d'un véhicule conforme à l'invention est l'atténuation de la fatigue physique de l'agent de conduite du fait de la suppression des inconforts posturaux.

Un autre avantage du dispositif de commande de la traction ou du freinage d'un véhicule conforme à l'invention est l'apport d'une assistance à l'agent de conduite de manière à assurer une performance maximum sur une ligne saturée à cantonnement flottant ou assimilable.

Un autre avantage du dispositif de commande de la traction ou du freinage d'un véhicule conforme à l'invention est qu'il offre des possibilités de liberté à l'agent de conduite tout en préservant sa présence en motrice et permettant à celui-ci de se déconnecter de sa tâche de conduite si besoin est.

Un autre avantage du dispositif de commande de la traction ou du freinage d'un véhicule conforme à l'invention est que l'agent de conduite reste maître du mode de conduite, à savoir manuel ou automatique.

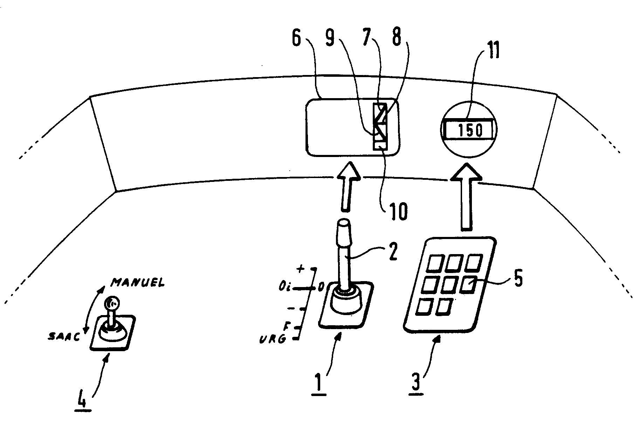

D'autres buts, caractéristiques et avantages de l'invention apparaîtront à la lecture de la description du mode de réalisation préféré du dispositif de commande de la traction ou du freinage d'un véhicule, description faite en liaison avec les dessins dans lesquels:
- la figure unique représente une vue globale du système de commande équipé d'un dispositif de commande de la traction ou du freinage d'un véhicule conforme à l'invention.

La figure unique montre, plus particulièrement, le dispositif de commande 1 de la traction ou du freinage d'un véhicule de l'invention.

Le dispositif de commande 1 de la traction ou du freinage d'un véhicule, notamment ferroviaire, comporte un levier mobile 2.

Ce levier mobile 2 est susceptible d'être positionné sur une première position 0 sur laquelle les fonctions de traction ou de freinage ne sont pas activées.

Ce levier mobile 2 est également susceptible de parcourir une première zone 0+, partant de ladite première position 0, sur laquelle la fonction de traction électrique est activée.

La fonction de traction électrique est alors activée soit par augmentation de l'effort de traction électrique, soit par diminution de l'effort de freinage électrique

Ce levier mobile 2 est également susceptible de parcourir une deuxième zone 0-, partant de ladite première position 0, sur laquelle la fonction de freinage électrique est activée.

La fonction de freinage électrique est alors activée soit par diminution de l'effort de traction électrique, soit par augmentation de l'effort de freinage électrique.

Ce levier mobile 2 est également susceptible de parcourir une troisième zone -F, partant de l'extrémité - de ladite deuxième zone 0-, sur laquelle la fonction de freinage pneumatique est activée.

Ce levier mobile 2 est également susceptible d'être positionné sur une seconde position URG, faisant suite à ladite troisième zone -F, sur laquelle les fonctions de freinage électrique et pneumatique sont activées simultanément.

Ces fonctions de freinage électrique et pneumatique sont activées simultanément avec normalement l'obtention du freinage pneumatique maximum par mise à l'atmosphère d'une conduite générale définie ci-après.

En d'autres termes, à partir d'une position 0 stable, des zones 0+ et 0- permettent de régler les efforts de traction et de freinage.

Le passage de la fonction traction à la fonction freinage, et inversement le passage de la fonction freinage à la fonction traction, se fait naturellement lorsqu'un effort de traction plus faible est demandé alors que l'effort de traction est déjà nul. Le frein commandé est le frein dynamique, c'est à dire le frein électrique.

Si l'agent de conduite désire utiliser le freinage défini par la conduite générale, qu'il soit en traction ou en freinage, il exerce une traction sur le levier de commande 2 en deçà de la position - jusqu'à la position instable F.

La conduite générale commande l'effort de freinage pneumatique en cas de dépression.

Cet effort est proportionnel à la dépression créée dans cette conduite générale.

Cette conduite générale est normalement à la pression de cinq bars.

Ce déplacement du levier de commande 2 a pour effet de couper l'éventuel effort de traction et de passer en freinage au moyen de la conduite générale en effectuant une première dépression ΔP.

Cette première dépression ΔP est un différentiel de pression significatif par rapport à la pression nominale de la conduite générale entraînant une première commande du freinage pneumatique.

Si le véhicule est déjà en freinage dynamique, le niveau d'effort reste au moins à la valeur qu'il a à ce moment là. Le réglage de la pression de la commande générale est commandé par des passages sur les zones + ou -.

Que l'on soit en traction ou en freinage dynamique ou en freinage au moyen de la commande générale, un passage sur une position instable 0i laisse le véhicule rouler sur l'erre, c'est à dire sur sa vitesse acquise, par annulation de la consigne d'effort électrique.

Cette position instable 0i fait face, par exemple, à la première position 0 laquelle est une position stable.

Au delà de la position F se trouve la position stable URG.

Le dispositif de commande 1 de la traction ou du freinage d'un véhicule de l'invention permet donc une conduite en traction ou freinage à commande entièrement manuelle au jugé de l'agent de conduite.

Le dispositif de commande 1 de l'invention peut être complété par un dispositif de réglage 3 de la vitesse de butée permettant une sélection, à l'initiative de l'agent de conduite, d'une vitesse de butée. La fonction d'un tel dispositif de réglage 3 de la vitesse de butée est de limiter la vitesse en garantissant le maintient automatique de la vitesse du véhicule à cette vitesse de butée. Il en résulte une fonction de régulation de vitesse, la vitesse étant alors au plus égal à cette vitesse de butée, et ce, même en marche sur l'erre et quelle que soit la position du levier de commande 2.

Le dispositif de commande 1 de l'invention peut également être complété par un système automatique d'assistance à la conduite SAAC pouvant être activé, sur lignes équipées, par l'agent de conduite et permettant un pilotage automatique du véhicule.

Un tel système automatique d'assistance à la conduite SAAC peut comprendre plusieurs options, à savoir:
- conduite à la vitesse maximum permise par la ligne,
- conduite à un pourcentage de cette vitesse maximum de la ligne, ou
- conduite aux vitesses horaires.

Le dispositif de commande de l'invention permet également la possibilité d'utiliser indépendamment le potentiel de freinage des motrices seulement, ou de l'ensemble d'une rame.

Le dispositif de commande de l'invention permet également une commande d'urgence.

La sélection du mode de conduite s'effectue à l'aide d'un commutateur 4 à deux positions MANUEL et SAAC.

Sur la position MANUEL, l'automatisme associé au dispositif de réglage 3 de la vitesse de butée est susceptible d'activer la totalité du frein dynamique (non représenté), quelles que soient la nature, traction ou freinage, et la valeur de l'effort demandé par le levier de commande 2.

Ce frein dynamique est suffisant pour assurer un freinage de maintien dans une pente de 35 pour mille.

Pour conduire en mode dit vitesse de butée, il est nécessaire de régler la vitesse butée à la valeur désirée, au moyen du dispositif de réglage 3 de la vitesse de butée, et de demander l'effort de traction souhaité, au moyen du dispositif de commande 1.

Le mode vitesse de butée ne pourra être utilisée que pour des vitesses supérieures à 30 km/h, sauf pour la conduite en désaccouplement, donc en profil plat, qui correspond à une vitesse de butée de 5 km/h.

En effet, en dessous de 30 km/h, le frein dynamique ne saurait garantir le respect de la vitesse de butée en pente importante.

Sur la position SAAC, l'automatisme associé au dispositif de réglage 3 de la vitesse de butée est susceptible d'activer l'ensemble des freins.

La vitesse de butée est sélectionnée, par exempe, à l'aide d'un clavier 5 du dispositif de réglage 3 de la vitesse de butée.

A titre d'exemple, l'agent de conduite introduit la valeur de la vitesse, puis valide la vitesse introduite. La valeur précédemment sélectionnée reste validée tant que la nouvelle valeur introduite n'est pas validée.

Les niveaux d'efforts de traction ou de freinage sont visualisés sur un premier dispositif à affichage 6, de préférence de manière symbolique.

Le dispositif à affichage 6 comprend une zone de visualisation de l'effort de traction 7, une zone centrale de visualisation d'effort nul 8, une zone de visualisation de l'effort de freinage 9 et une zone de visualisation du freinage d'urgence 10.

La vitesse de butée sélectionnée et validée est visualisée sur un second dispositif à affichage 11, de préférence numérique à trois chiffres.

En cas d'impossibilité de respecter temporairement la vitesse butée commandée, dans le cas de la validation d'une vitesse butée inférieure à la vitesse du train, par exemple, le second dispositif à affichage 11 clignote jusqu'à ce que la vitesse de butée soit atteinte.

La position du commutateur 4 de sélection de mode de conduite visualise le choix effectué.

Comme indiqué précédemment, l'invention porte également sur un procédé de mise en oeuvre du dispositif de commande de la traction ou du freinage d'un véhicule.

Le procédé de mise en oeuvre du dispositif de commande de la traction ou du freinage d'un véhicule de l'invention comporte les étapes suivantes:
- activation des fonctions de traction ou de freinage lorsque le levier de commande est positionné sur une première position 0;
- activation de la fonction de traction lorsque le levier de commande parcourt une première zone 0+, partant de ladite première position 0;
- activation de la fonction de freinage électrique lorsque le levier de commande parcourt une deuxième zone 0-, partant de ladite première position 0;
- activation de la fonction de freinage pneumatique lorsque le levier de commande parcourt une troisième zone -F, partant de l'extrémité - de ladite deuxième zone 0-; et
- activation des fonctions de freinage électrique et pneumatique lorsque le levier de commande est positionné sur une seconde position URG, faisant suite à ladite troisième zone -F.

Conformément à ce procédé de mise en oeuvre, la visualisation des niveaux d'efforts de traction ou de freinage s'effectue au moyen d'un premier dispositif à affichage (6).

Toujours conformément à ce procédé de mise en oeuvre, la visualisation de la vitesse de butée sélectionnée et validée s'effectue au moyen d'un second dispositif à affichage (11).

## Revendications

1. Dispositif de commande (1) de la traction ou du freinage d'un véhicule, notamment ferroviaire, comportant un levier de commande mobile; caractérisé en ce que ce levier est (2) susceptible:
- d'être positionné sur une première position 0 sur laquelle les fonctions de traction ou de freinage ne sont pas activées;
- d'être maintenu sur une position instable 0i sur laquelle le véhicule roule sur l'erre par annulation des efforts de traction et de freinage électriques;
- de parcourir une première zone 0+, partant de ladite première position 0, sur laquelle la fonction de traction électrique est activée, soit par augmentation de l'effort de traction électrique, soit par diminution de l'effort de freinage électrique;
- de parcourir une deuxième zone 0-, partant de ladite première position 0, sur laquelle la fonction de freinage électrique est activée, soit par diminution de l'effort de traction électrique, soit par augmentation de l'effort de freinage électrique;
- de parcourir une troisième zone -F, partant de l'extrémité - de ladite deuxième zone 0-, sur laquelle la fonction de freinage pneumatique est activée; et
- d'être positionné sur une seconde position URG, faisant suite à ladite troisième zone -F, sur laquelle les fonctions de freinage électrique et pneumatique sont activées en même temps.

2. Dispositif de commande selon la revendication 1; associé à un dispositif de réglage (3) de la vitesse de butée permettant une sélection d'une vitesse de butée de manière à limiter la vitesse en garantissant le maintient automatique de la vitesse du véhicule à la vitesse de butée.

3. Dispositif de commande selon l'une quelconque des revendications 1 ou 2; associé à un commutateur (4) à deux positions MANUEL et SAAC permettant la sélection du mode de conduite.

4. Dispositif de commande selon l'une quelconque des revendications 1 à 3; associé à un système automatique d'assistance à la conduite SAAC permettant un pilotage automatique du véhicule.

5. Dispositif de commande selon la revendication 4; associé audit système automatique d'assistance à la conduite SAAC lequel comprend l'une ou l'autre des options suivantes:
- conduite à la vitesse maximum permise par la ligne,
- conduite à un pourcentage de cette vitesse maximum de la ligne, ou
- conduite aux vitesses horaires.

6. Dispositif de commande selon l'une quelconque des revendications 1 à 5; associé à un premier dispositif à affichage (6) permettant de visualiser les niveaux d'efforts de traction ou de freinage.

7. Dispositif de commande selon la revendication 6; associé audit dispositif à affichage (6) lequel comprend une zone (7) de visualisation de l'effort de traction électrique, une zone centrale (8) de visualisation d'effort nul, une zone (9) de visualisation de l'effort de freinage électrique et une zone (10) de visualisation du freinage pneumatique et d'urgence.

8. Dispositif de commande selon l'une quelconque des revendications 1 à 7; associé à un second dispositif à affichage (11) permettant de visualiser la vitesse de butée sélectionnée et validée.

9. Procédé de mise en oeuvre du dispositif de commande de la traction ou du freinage d'un véhicule selon l'une quelconque des revendications 1 à 8; caractérisé en ce qu'il comporte les étapes suivantes:
- activation des fonctions de traction ou de freinage lorsque le levier de commande est positionné sur une première position 0;
- activation du roulement sur l'erre du véhicule, lorsque le levier de commande est maintenu sur une position instable 0i, par annulation des efforts de traction et de freinage électriques;
- activation de la fonction de traction lorsque le levier de commande parcourt une première zone 0+, partant de ladite première position 0, soit par augmentation de l'effort de traction électrique, soit par diminution de l'effort de freinage électrique;
- activation de la fonction de freinage électrique lorsque le levier de commande parcourt une deuxième zone 0-, partant de ladite première position 0, soit par diminution de l'effort de traction électrique, soit par augmentation de l'effort de freinage électrique;
- activation de la fonction de freinage pneumatique lorsque le levier de commande parcourt une troisième zone -F, partant de l'extrémité - de ladite deuxième zone 0-; et
- activation des fonctions de freinage électrique et pneumatique lorsque le levier de commande est positionné sur une seconde position URG, faisant suite à ladite troisième zone -F.

10. Procédé de mise en oeuvre selon la revendication 9; dans lequel la visualisation des niveaux d'efforts de traction ou de freinage s'effectue au moyen d'un premier dispositif à affichage (6).

11. Procédé de mise en oeuvre selon l'une quelconque des revendications 9 ou 10; dans lequel la visualisation de la vitesse de butée sélectionnée et validée s'effectue au moyen d'un second dispositif à affichage (11).

## Claims

1. A control device (1) for controlling traction or braking of a vehicle, in particular a rail vehicle, including a moving control lever, said control device being characterized in that said lever (2) is capable of:
being positioned in a first position 0 in which neither the traction function nor the braking function are activated;
being held in an unstable position 0i in which the vehicle coasts by reducing the electrical traction force and the electrical braking force to zero;
travelling over a first zone 0+, from said first position 0, over which zone the electrical traction function is activated, either by increasing the electrical traction force, or by decreasing the electrical braking force;
travelling over a second zone 0-, from said first position 0, over which zone the electrical braking function is activated, either by decreasing the electrical traction force, or by increasing the electrical braking force;
travelling over a third zone -F, from the - end of said second zone 0-, over which third zone the pneumatic braking function is activated; and
being positioned in a second position EM, following said third zone -F, in which both the electrical braking function and the pneumatic braking function are activated simultaneously.

2. A control device according to claim 1, associated with a limit speed setting device (3) enabling a limit speed to be selected so as to limit the speed while guaranteeing that the speed of the vehicle is maintained automatically at the limit speed.

3. A control device according to claim 1 or 2, associated with a switch (4) having two positions MANUAL & AUTO enabling the driving mode to be selected.

4. A control device according to any one of claims 1 to 3, associated with an automatic driving-assistance system enabling the vehicle to be put on automatic pilot.

5. A control device according to claim 4, associated with said automatic driving-assistance system which offers any one of the following options:
driving at the maximum speed allowed by the line;
driving at a percentage of the maximum speed of the line; or
driving at timetable speeds.

6. A control device according to any one of claims 1 to 5, associated with a first display device (6) enabling the traction force and braking force levels to be displayed.

7. A control device according to claim 6, associated with said display device (6) which includes a zone (7) for displaying the electrical traction force, a central zone (8) for displaying zero force, a zone (9) for displaying the electrical braking force, and a zone (10) for displaying pneumatic braking and emergency braking.

8. A control device according to any one of claims 1 to 7, associated with a second display device (11) enabling the selected and confirmed limit speed to be displayed.

9. A method of implementing the control device according to any one of claims 1 to 8 for controlling traction or braking of a vehicle, said method being characterized in that it includes the following steps:
activating the traction function or the braking function when the control lever is positioned in a first position 0;
activating coasting of the vehicle, when the control lever is held in an unstable position 0i, by reducing the electrical traction force and the electrical braking force to zero;
activating the traction function when the control lever travels over a first zone 0+, from said first position 0, either by increasing the electrical traction force, or by decreasing the electrical braking force;
activating the electrical braking function when the control lever travels over a second zone 0- from said first position 0, either by deceasing the electrical traction force, or by increasing the electrical braking force;
activating the pneumatic braking function when the control lever travels over a third zone -F, from the - end of said second zone 0-; and
activating the electrical braking function and the pneumatic braking function when the control lever is positioned in a second position EM, following said third zone -F.

10. A method according to claim 9, in which the traction force or braking force levels are displayed by means of a first display device (6).

11. A method according to claim 9 or 10, in which the selected and confirmed limit speed is displayed by means of a second display device (11).

## Patentansprüche

1. Antriebs- oder Bremssteuervorrichtung (1) eines Fahrzeuges, insbesondere eines Schienenfahrzeuges, mit einem beweglichen Steuerhebel, **dadurch gekennzeichnet**, dass der Hebel in der Lage ist:
- in einer ersten Position 0 positioniert zu werden, in der die Antriebs- oder Bremsfunktionen nicht aktiviert sind;
- in einer instabilen Position 0i gehalten zu werden, in der das Fahrzeug durch Aufhebung der elektrischen Antriebs- und Bremskräfte abrollt;
- eine erste Zone 0+ ausgehend von der ersten Position 0 zu durchlaufen, in der die elektrische Antriebsfunktion aktiviert ist, durch Erhöhen der elektrischen Antriebskraft oder durch Verringern der elektrischen Bremskraft;
- eine zweite Zone 0- ausgehend von der ersten Position 0 zu durchlaufen, in der die elektrische Bremsfunktion aktiviert ist, durch verringern dar elektrischen Antriebskraft oder durch Erhöhen der elektrischen Bremskraft;
- eine dritte Zone -F ausgehend von dem Ende - der zweiten Zone 0- zu durchlaufen, in der die pneumatische Bremsfunktion aktiviert ist; und
- in einer zweiten Position URG positioniert zu werden, die auf die dritte Zone -F folgt, in der die elektrische und pneumatische Bremsfunktion gleichzeitig aktiviert sind.

2. Steuervorrichtung nach Anspruch 1, zugeordnet einer Regelvorrichtung (3) der Grenzgeschwindigkeit, die eine Auswahl einer Grenzgeschwindigkeit gestattet, um die Geschwindigkeit zu begrenzen und dabei die automatische Einhaltung der Grenzgeschwindigkeit durch das Fahrzeug zu garantieren.

3. Steuervorrichtung nach einem der Ansprüche 1 oder 2, zugeordnet einem Umschalter (4) mit zwei Positionen MANUEL und SAAC, der die Auswahl des Fahrmodus gestattet.

4. Steuervorrichtung nach einem der Ansprüche 1 bis 3; zugeordnet einem automatischen Fahrtunterstützungssystem SAAC, das eine automatische Führung des Fahrzeuges gestattet.

5. Steuervorrichtung nach Anspruch 4; zugeordnet dem automatischen Fahrtunterstützungssystem SAAC, welches die eine oder andere der folgenden Optionen umfasst:
- Fahren bei der für die Strecke zugelassenen Maximalgeschwindigkeit,
- Fahren bei einem Prozentsatz dieser Maximalgeschwindigkeit der Strecke oder
- Fahren mit Fahrplangeschwindigkeiten.

6. Steuervorrichtung nach einem der Ansprüche 1 bis 5; zugeordnet einer ersten Anzeigevorrichtung (6), die es gestattet, die Höhen der Antriebs- oder Bremskräfte sichtbar zu machen.

7. Steuervorrichtung nach Anspruch 6, zugeordnet der Anzeigevorrichtung (6), die eine Zone (7) der Sichtbarmachung der elektrischen Antriebskraft, eine zentrale Zone (8) der Sichtbarmachung von 0-Kraft, eine Zone (9) der Sichtbarmachung der elektrischen Bremskraft und eine Zone (10) der Sichtbarmachung der pneumatischen und der Notbremsung umfasst.

8. Steuervorrichtung nach einem der Ansprüche 1 bis 7; zugeordnet einer zweiten Anzeigevorrichtung (11), die es gestattet, die ausgewählte und bestätigte Grenzgeschwindigkeit sichtbar zu machen.

9. Verfahren zur Anwendung der Antriebs- oder Steuervorrichtung eines Fahrzeuges nach einem beliebigen der Ansprüche 1 bis 8; dadurch gekennzeichnet, dass es folgende Schritte umfasst:
- Deaktivieren der Antriebs- oder Bremsfunktion, wenn der Steuerhebel in einer ersten Position 0 positioniert ist;
- Aktivieren des Abrollens des Fahrzeuges, wenn der Steuerhebel in einer instabilen Position 0i gehalten wird durch Aufhebung der elektrischen Antriebs- und Bremskräfte;
- Aktivieren der Antriebsfunktion, wenn der Steuerhebel eine erste Zone 0+ ausgehend von der ersten Position 0 durchläuft, durch Erhöhen der elektrischen Antriebskraft oder durch Verringern der elektrischen Bremskraft;
- Aktivieren der elektrischen Bremsfunktion, wenn der Steuerhebel eine zweite Zone 0- ausgehend von der ersten Position 0 durchläuft, durch Verringern der elektrischen Antriebskraft oder durch Erhöhen der elektrischen Bremskraft;
- Aktivieren der pneumatischen Bremsfunktion, wenn der Steuerhebel eine dritte Zone -F ausgehend vom Ende - der zweiten Zone 0- durchläuft; und
- Aktivieren der elektrischen und pneumatischen Bremsfunktion, wenn der Steuerhebel in einer zweiten Position URG positioniert ist, die auf die dritte Zone -F folgt.

10. Anwendungsverfahren nach Anspruch 9; bei dem die Sichtbarmachung der Höhen der Antriebs- oder Bremskräfte mit Hilfe einer ersten Anzeigevorrichtung (6) erfolgt.

11. Anwendungsverfahren nach einem beliebigen der Ansprüche 9 oder 10; bei dem die Sichtbarmachung der ausgewählten und bestätigten Grenzgeschwindigkeit mit Hilfe einer zweiten Anzeigevorrichtung (11) erfolgt.
